# EUROPEAN PATENT APPLICATION

(11) **EP 4 545 819 A1**
(43) Date of publication of application: **30.04.2025**
(21) Application number: 23206453.5
(22) Date of filing: 27.10.2023
(51) Int. Cl.: F16F 9/32, B62D 7/22, F16F 9/20, B62K 21/08

(54) **VALVE FOR SEPARATING PISTON ASSEMBLY**

(71) Applicant: Öhlins Racing AB, 194 27 Upplands Väsby (SE)
(72) Inventor: EKBLAD, Gustav, 194 27 Upplands Väsby (SE)
(74) Representative: AWA Sweden AB

(57) **Abstract**

The present application relates to a valve (100) for use in a separating piston assembly (200) of a steering damping system. The valve (100) comprising: a valve housing (110) extending along a longitudinal axis (A) and comprising a damping fluid inlet (121), and a damping fluid outlet (122); a valve member (130) arranged within the valve housing (110) and configured to be movable along the longitudinal axis (A); a spring (140) arranged within the valve housing and comprising a resilient portion (141) and an engaging portion (142); wherein the resilient portion (141) is configured to exert a force on the valve member (130) in a direction towards the damping fluid inlet (121); and the engaging portion (142) is configured to engage with the valve member (130). A separating piston assembly (200) and a method is also provided.

## Description

### Technical Field

The present disclosure generally relates to the field of piston assemblies, in particular for vehicles. More particularly, the present disclosure relates to a valve for use in a separating piston assembly of a steering damping system.

### Background

Shock absorbers are widely used within vehicles and are designed to absorb and damp shock impulses, thereby improving vehicle manoeuvrability and the overall driving of the vehicle. With respect to absorption of shocks and stabilization of the steering of vehicles, steering damping systems are generally used to prevent or control undesirable movement of oscillation of a vehicle steering mechanism. For instance, in the case of a motorcycle, steering damping systems comprising steering dampers may absorb the side-to-side motion of the front wheel of the motorcycle, enabling the front fork to function properly in absorption of shocks and keep the vehicle stable.

Steering damping systems commonly comprise an integrated separating piston, or auxiliary piston, fulfilling the function of regulating the pressure of damping fluid in the steering damper to ensure that the steering damper functions efficiently. For example, the separating piston may compensate for changes in volume of damping fluid in the steering damping assembly as a result of changes in temperature, leakage, etc., so that the damping characteristics of the steering damping system remain constant and adequate despite the above-mentioned varying factors.

Generally, the separating piston is arranged in a cavity of the steering damping system and positioned parallel to the main piston of the steering damping system and extending in a similar length such that it can carry out its function with respect to maintain the pressure in the steering damping system within a predetermined range. The flow of damping fluid from the separating piston into the main piston is regulated by a check valve securely attached to a valve housing integrally formed in the cavity. However, the positioning of the check valve may render its assembly and maintenance complex and time consuming.

### Summary

It is an object of the present disclosure to alleviate at least some of the deficiencies of current steering damping assemblies and their separating piston, particularly regarding the check valve regulating the flow of fluid from the separating piston to the steering damper. A first object of the invention is to provide a valve for arrangement for arrangement in a separating piston assembly which is more durable than prior art solutions and requires less frequent maintenance. The first object is solved by the invention according to claim 1. This and other objects are achieved by providing a valve for use in a separating piston assembly of a steering damping system and a separating piston assembly of a steering damping system. Preferred embodiments are defined in the dependent claims.

According to a first aspect of the invention, a valve for use in a separating piston assembly of a steering damping system is provided. The valve comprises:
a valve housing extending along a longitudinal axis. The valve housing comprises: a damping fluid inlet, and a damping fluid outlet. The valve comprises: a valve member arranged within the valve housing and configured to be movable along the longitudinal axis. The valve comprises: a spring arranged within the valve housing. The spring comprises: a resilient portion, and an engaging portion. The resilient portion is configured to exert a force on the valve member in a direction towards the damping fluid inlet. The engaging portion is configured to engage with the valve member.

The valve may enhance the separating piston assembly's ability to compensate for changes in volume of damping fluid in the steering damping system as a result of changes in temperature, leakage, etc., so that the damping characteristics of the steering damping system remain constant and adequate despite the above-mentioned varying factors.

Moreover, the valve removes the need for conventional securing means such as a circlip and washer arrangement for securing the valve in a separating piston assembly and may as a consequence result in facilitated assembly and more reliable performance. Moreover, associated risks of wear and tear may be reduced, resulting in less frequent maintenance of the valve and the separating piston assembly in which the valve is arranged. Moreover, by the engaging portion of the spring engaging with the valve member, the valve member may move along the longitudinal axis in a predetermined manner. It may mutually help the spring and the valve member for accurate assembly and prevent the spring and/or the valve member from getting stuck in the valve housing. Thereby, the need for maintenance may be reduced.

By engaging with, it may mean that the spring and valve member interact with one another. It may mean that they cooperate to maintain a desired alignment so as not to impair functionality of the valve. It may mean that the spring and valve member are fixedly coupled to one another or that they are slidably coupled to one another, i.e., the valve member may move relative the spring in at least one direction while engaging with the spring via the engaging portion.

The resilient portion is configured to exert a force on the valve member in a direction towards the damping fluid inlet. By exerting a force, it may include that the resilient portion exerts a force on the valve member via direct contact or that the resilient portion exerts a force on the valve member via indirect contact, such as via one or more elements between the resilient portion and the valve member.

According to one embodiment, the valve member is configured to be moveable between a closed position in which the valve member is configured to at least partially prevent a flow of damping fluid from the damping fluid inlet to the damping fluid outlet of the valve housing, and an open position in which the valve member is configured to allow a flow of damping fluid from the damping fluid inlet to the damping fluid outlet of the valve housing. By at least partially prevent a flow, it may mean that the valve member restricts a flow of damping fluid from the damping fluid inlet to the damping fluid outlet. The valve may be adapted so that the valve member substantially prevents said flow when in the closed position.

The valve member may be moveable between the closed position and the open position by being axially displaced relative the damping fluid inlet. The valve member may in the open position permit damping fluid flow via an orifice formed between the damping fluid inlet and the valve member. The orifice may be variable in orifice size by movement of the valve member relative the damping fluid inlet. The valve member may in the closed position prevent damping fluid flow via said orifice; said orifice may be substantially closed.

According to one embodiment, the valve member is configured to be moveable from the closed position to the open position upon the flow of damping fluid exerting a force on the valve member greater than the force exerted by the resilient portion of the spring on the valve member. By this, the valve member may open in a reliable manner. The valve member may be substantially designed to function as a check valve. the valve member is configured to be moveable from the closed position to the open position upon the flow of damping fluid exerting a force on the valve member greater than the force exerted by the resilient portion of the spring on the valve member in an opposite direction.

According to one embodiment, the valve housing further comprises a central portion intermediate the damping fluid inlet and the damping fluid outlet, wherein the valve member is arranged within the central portion. The central portion of the valve housing may be adapted to limit movement range of the valve member in at least a first direction and optionally in two directions. The movement range may be along a longitudinal axis. The central portion may be located between the damping fluid inlet and the damping fluid outlet. The central portion may be arranged concentrically with the damping fluid inlet and/or the damping fluid outlet. The valve member and valve housing may be adapted so that the valve member may be inserted into the valve housing depending on orientation of the valve member relative the valve housing. When inserted into the valve housing, the valve member may be oriented so as to be unable to exit the valve housing without changing orientation relative the valve housing.

According to one embodiment, an inner diameter of the central portion of the valve housing is greater than an inner diameter of the damping fluid inlet and an inner diameter of the damping fluid outlet. An inner diameter of the central portion of the valve housing is greater than an inner diameter of the damping fluid inlet. An inner diameter of the central portion of the valve housing is greater than an inner diameter of the damping fluid outlet. The valve member may have an outer diameter greater than the inner diameter of the damping fluid inlet and be smaller than the inner diameter of the central portion of the valve housing. The valve member may be capable of fully closing the damping fluid inlet when in a closed position yet enable damping fluid to flow in a gap formed between the central portion and the valve member. The outer diameter of the valve member may be smaller than the inner diameter of the damping fluid outlet. The valve member may be prevented from moving out of the valve housing. The valve housing may comprise a plurality of portions which is assembled once the valve member has been inserted into the valve housing. The inner diameter of the damping fluid outlet may be larger than the inner diameter of the damping fluid inlet.

According to one embodiment, the resilient portion of the spring is formed by a coil, wherein said coil is optionally concentric with the valve housing and/or with the valve member. The spring may be at least partially arranged in the central portion of the valve housing. The valve housing may be adapted to house the spring in a controlled manner, for instance, the outer diameter of the coil of the spring may substantially be the same as the inner diameter of the central portion. This may prevent the spring from being misaligned during use of the valve. The coil of the spring may abut the valve member and exert said force onto the valve member.

According to one embodiment, the coil comprises a coil end configured for abutting a recess formed by the damping fluid outlet and the central portion of the valve housing and a movable end configured for abutting a first surface of the valve member. The coil end may be adapted to be fixedly attached to the valve housing. The coil of the spring may be adapted in size and shape to be able to provide a desired force onto the valve member. By design of the resilient portion, in particular the coil, an opening pressure of the valve may be adjusted.

According to one embodiment, the engaging portion of the spring comprises an anchoring end configured to prevent the spring from disengaging from the valve member. By this, the spring may be further prevented from being misaligned during use of the valve. Moreover, it may also facilitate assembly since the spring and valve member are provided together. The engaging portion may comprise a first portion extending in an elongated direction and having a first cross section along the elongated direction. The anchoring end may be adjacent said first portion. The anchoring end may extend in an elongated direction. The anchoring end may have a second cross section larger than the first cross section in at least one cross sectional dimension or in two cross sectional dimensions. By this, the anchoring end may have a shape limiting movement of the valve member relative the spring. The anchoring end may be formed by deforming a portion of the engaging portion or a portion connected to the engaging portion.

According to one embodiment, the valve member comprises an aperture adapted for allowing the engaging portion of the spring to extend therethrough. By extending through the aperture of the valve member, the engaging portion may limit movement of the valve member in a side-ways direction. By side-ways direction, it may mean a direction lateral to a movement axis of the valve member, which movement axis may coincide with the longitudinal axis. When the valve member is displaced from the damping fluid inlet, the valve member may move relative the engaging portion to a position where the resilient portion flexes and exerts a force on the valve member to cause it to move towards the fluid inlet. The aperture may extend along an axis along which the valve member is moveable. The aperture may be a central aperture, i.e., being located substantially centrally in the valve member. The aperture may be an aperture offset from said axis.

According to one embodiment, the valve member is configured to move relative the engaging portion between the open position and the closed position. The engaging portion may define an axis along which the valve member is moveable. Said movement axis may coincide with, or may be, the aforementioned longitudinal axis. By the engaging portion of the spring extending through the aperture of the valve member, the movement of the valve member may be enabled to occur in a controlled manner.

According to one embodiment, a diameter of the valve member is less than the inner diameter of the central portion of the valve housing. By this, a gap may be formed between the valve member and the central portion, allowing damping fluid to flow through said gap when the valve member is moved to an open position. Alternatively, the valve member may comprise one or more apertures extending from a first side of the valve member to a second side of the valve member. Said one or more apertures may be blocked downstream from the damping fluid inlet when the valve member is in a closed position but may be accessible downstream from the damping fluid inlet when the valve member is in an open position.

According to one embodiment, in the closed position, a second surface of the valve member, opposite the first surface of the valve member, is configured for abutting a shoulder of the valve housing formed by the damping fluid inlet and the central portion of the valve housing such that damping fluid is prevented from flowing between the valve member and the central portion of the valve housing. By this, the valve may be in a state where it is fully closed.

According to one embodiment, in the open position, the second surface of the valve member is distant from the shoulder of the valve housing such that damping fluid is allowed to flow between the valve member and the central portion of the valve housing.

According to one embodiment, the aperture of the valve member allows damping fluid to leak therethrough. The damping fluid leaking therethrough may be a bleed flow.

By bleed flow, it may be meant a flow flowing through an orifice having an orifice size which does not depend on pressure. The orifice may be provided with a bleed valve. The bleed valve may be adjusted in a pressure independent manner such that the orifice size varies. The orifice may be provided with a fixed restriction, having an orifice size which cannot be varied.

By "restrict a flow", it may be meant regulating a pressure and/or the flow itself.

The valve member may comprise one or more apertures for enabling a bleed flow through the valve member even when the valve member is in a closed position.

According to a second aspect of the invention, a separating piston assembly for a steering damping system is provided. The separating piston assembly comprises: an inner cylinder and an outer cylinder, wherein the inner cylinder is arranged within the outer cylinder. The separating piston assembly comprises: a damping fluid chamber, formed between the inner cylinder and the outer cylinder. The outer cylinder comprises: a first damping fluid duct configured to allow a flow of fluid to and from the damping fluid chamber (230), and optionally a second damping fluid duct configured to allow a flow of fluid to and from the damping fluid chamber. The inner cylinder comprises: a separating piston, movably arranged therein, and a separating chamber formed between the separating piston and a damping fluid outlet of the inner cylinder. The separating piston further comprises a valve according to the first aspect of the invention or any embodiments thereof. The valve is arranged at the damping fluid outlet of the inner cylinder and configured to allow a flow of damping fluid from the separating chamber to the damping fluid chamber. The first damping fluid duct and the second damping fluid duct may be adapted to permit damping fluid flow to a cavity of a cylinder of a steering damping system. One of the first and second damping fluid duct may be adapted to permit damping fluid flow to a rebound chamber of the cavity. One other of the first and second damping fluid duct may be adapted to permit damping fluid flow to a compression chamber of the cavity. The cavity may be separated into a rebound chamber and a compression chamber. The cavity may be separated into said rebound chamber and said compression chamber by means of a piston element. The piston element may comprise one or more valves for regulating flow between rebound chamber and compression chamber. The piston element may comprise one or more bleed flow channels for permitting bleed flow between the rebound chamber and the compression chamber. The steering damping system may be adapted so that the one or more valves in the piston and/or the one or more bleed flow channels are adjustable, for instance from a distance, for instance by mechanical means or electromechanical means.

By providing a separating piston assembly comprising the aforementioned valve, an improved separating piston assembly is achieved. The separating piston assembly may be used for a steering damping system. The steering damping system may be adapted to be implemented with a vehicle, such as a two-wheeled vehicle (e.g., motorcycle, a mountain bike, cycle, or the like), or such as a three-wheeled vehicle or a four-wheeled vehicle, or other types of vehicles not limited to two, three, or four wheels.

According to one embodiment, the first damping fluid duct is configured to enable flow of damping fluid between the damping fluid chamber and a return chamber of a steering damper.

According to one embodiment, the second damping fluid duct is configured to enable flow of damping fluid between the damping fluid chamber and a third damping fluid duct.

According to one embodiment, the third damping fluid duct is configured to enable flow of damping fluid between the second damping fluid duct and a compression chamber of the steering damper.

According to one embodiment, the valve is configured to at least partially prevent flow of damping fluid from the damping fluid chamber to the separating chamber of the inner cylinder.

According to a third aspect of the invention, a method of regulating a damping fluid flow in a separating piston assembly of a steering damping system is provided. The method comprises the steps of: providing a valve according to the first aspect of the invention or any embodiments thereof; in response to pressure overcoming force from said spring, moving the valve member along the longitudinal axis away from the damping fluid inlet; in response to pressure no longer overcoming force from said spring, moving the valve member along the longitudinal axis toward the damping fluid inlet.

By "pressure overcoming force from said spring", it may be meant that the pressure on the valve member is such that the spring compresses. By "pressure no longer overcoming force from said spring", it may be meant that the pressure on the valve member is such that the spring expands.

According to a fourth aspect of the invention, a computer program is provided. The computer program comprises instructions which, when the program is executed by a computer, cause the computer to carry out the method according to the first aspect or any embodiments thereof.

According to a fifth aspect of the invention, a computer-readable storage medium is provided. The computer-readable storage medium comprising instructions which, when executed by a computer, cause the computer to carry out the method according to the first aspect or any embodiments thereof.

Effects and features of the second and third and fourth and fifth aspects are largely analogous to those described above in connection with the first aspect. Embodiments mentioned in relation to the first aspect are largely compatible with the second aspect and third aspect and fourth aspect and fifth aspect. It is further noted that the inventive concepts relate to all possible combinations of features unless explicitly stated otherwise.

The invention is defined by the appended independent claims, with embodiments being set forth in the appended dependent claims, in the following description and in the drawings.

### Brief Description of the Drawings

The invention will in the following be described in more detail with reference to the enclosed drawings, wherein:
Fig. 1 shows a cross-sectional view of a valve according to one embodiment of the invention;
Fig. 2 shows a perspective view of a valve according to one embodiment of the invention;
Fig. 3 shows a perspective view of a valve according to one embodiment of the invention;
Fig. 4 shows a side view of a damper comprising a separating piston assembly according to one embodiment of the invention;
Fig. 5 shows a cross-sectional view of a damper comprising a separating piston assembly according to one embodiment of the invention;
Fig. 6 shows a cross-sectional view of a damper comprising a separating piston assembly according to one embodiment of the invention;
Fig. 7 shows a cross-sectional view of some components of a separating piston assembly according to one embodiment of the invention;

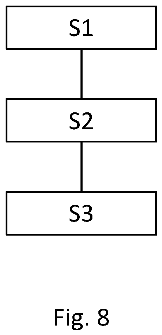

Fig. 8 shows a schematic representation of a method according to one embodiment of the invention.

### Description of Embodiments

The invention will now be described with reference to the attached figures. Features illustrated or described as part of one embodiment may be used with another embodiment to yield still a further embodiment. In the interest of clarity, not all features of an actual implementation are described in this specification. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter.

The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

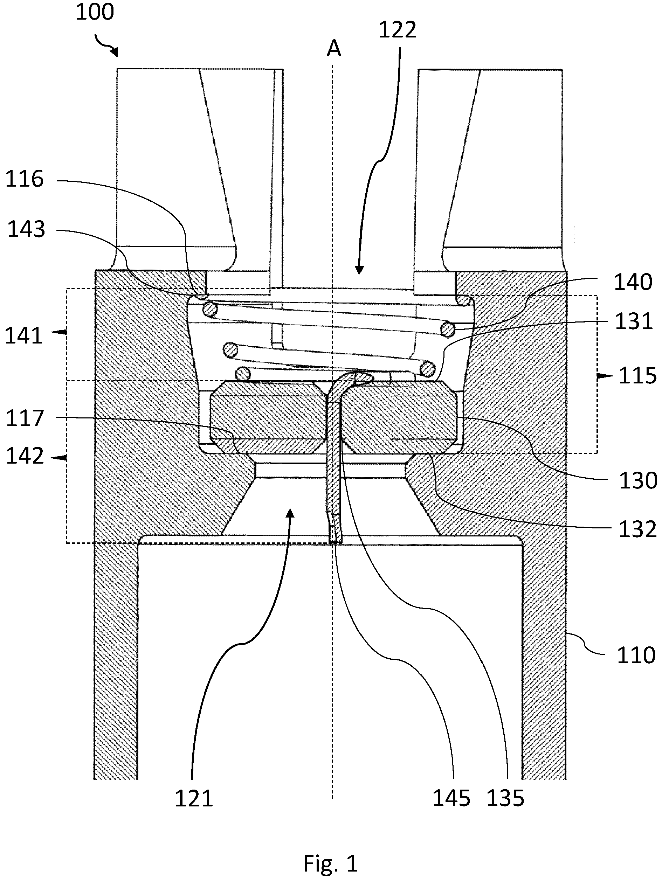

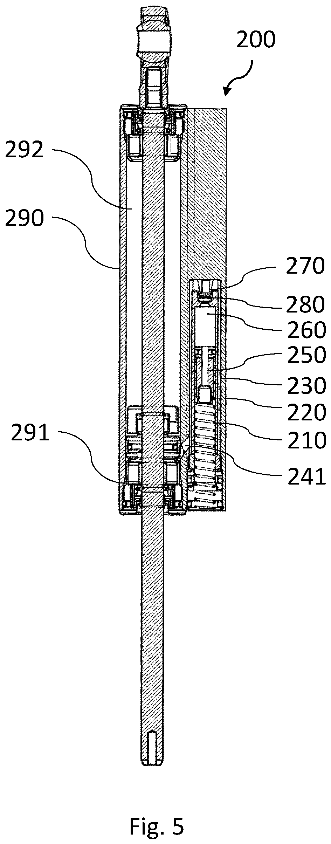

Fig. 1 shows a valve 100 for use in a separating piston assembly 200 of a steering damping system is provided. Fig. 5 shows the valve 100 when arranged in a separating piston assembly 200. According to one exemplary embodiment, as shown in Fig. 1, the valve 100 comprises a valve housing 110 extending along a longitudinal axis A. The valve housing 110 further comprises a damping fluid inlet 121. The housing 110 further comprises a damping fluid outlet 122. The damping fluid inlet 121 and the damping fluid outlet 122 may be aligned along the longitudinal axis A as exemplified in Fig. 1. The damping fluid inlet 121 and the damping fluid outlet 122 may be concentrically aligned. Either or both of the damping fluid inlet 121 and the damping fluid outlet 122 may have substantially circular cross-section along the longitudinal axis A. The damping fluid inlet 121 and the damping fluid outlet 122 may be concentrically arranged. The damping fluid inlet 121 and the damping fluid outlet 122 may however be arranged in other configurations.

The valve 100 further comprises a valve member 130. The valve member 130 is arranged within the valve housing 110 and configured to be movable along the longitudinal axis A. By "arranged within", it may be meant wholly located in the valve housing 110 or at least partially in the valve housing 110. Further, it may be meant that the valve member 130 is wholly located in the valve housing 110 irrespective of predefined movement range along the longitudinal axis A. Alternatively, it may be meant that the valve member 130 is wholly located in the valve housing 110 when in a first position but moveable to a second position where the valve member 130 is at least partially outside the valve housing 110. In the embodiment exemplified in Fig. 1, the valve member 130 is wholly located in housing 110 irrespective of predefined movement range along the longitudinal axis A.

The valve 100 further comprises a spring 140. The spring 140 is arranged within the valve housing 110. By the spring 140 being arranged within the valve housing 110, it may be meant the spring 140 is wholly or partially arranged in the valve housing 110. The spring 140 comprises a resilient portion 141. The spring 140 comprises an engaging portion 142. The resilient portion 141 is configured to exert a force on the valve member 130 in a direction of the longitudinal axis A towards the damping fluid inlet 121. The resilient portion 141 may be a coil spring portion adapted in size and shape for exerting a desired force on the valve member 130 in the direction of the longitudinal axis A towards the damping fluid inlet 121. The engaging portion 142 extends through the valve member 130 along the longitudinal axis A. The engaging portion 142 may be adapted in size and shape to provide an elongated portion extending a distance along the longitudinal axis A. The resilient portion 141 and the engaging portion 142 may be directly or indirectly connected to one another.

The valve member 130 is moveable along the longitudinal axis A. By moveable along an axis, it may be meant that moveable coincidingly with the axis or parallel to the axis, at least with one movement vector component in parallel to the axis or wholly parallel with the axis. Depending on position, the valve member 130 allows a damping fluid flow from the damping fluid inlet 121 to the damping fluid outlet 122. Moreover, the valve member 130 may regulate the damping fluid flow from the damping fluid inlet 121 to the damping fluid outlet 122 in response to pressure acting on the valve member 130. The spring 140 may exert force on the valve member 130 in a direction towards the damping fluid inlet 121. Hence, if the valve member 130 has been displaced from the damping fluid inlet 121 in response to pressure, the spring 140 may force the valve member 130 to return towards the damping fluid inlet 121.

The engaging portion 142 extends through the valve member 130 along the longitudinal axis A.. The spring 140 may thus facilitate movement of the valve member 130 along the longitudinal axis A.

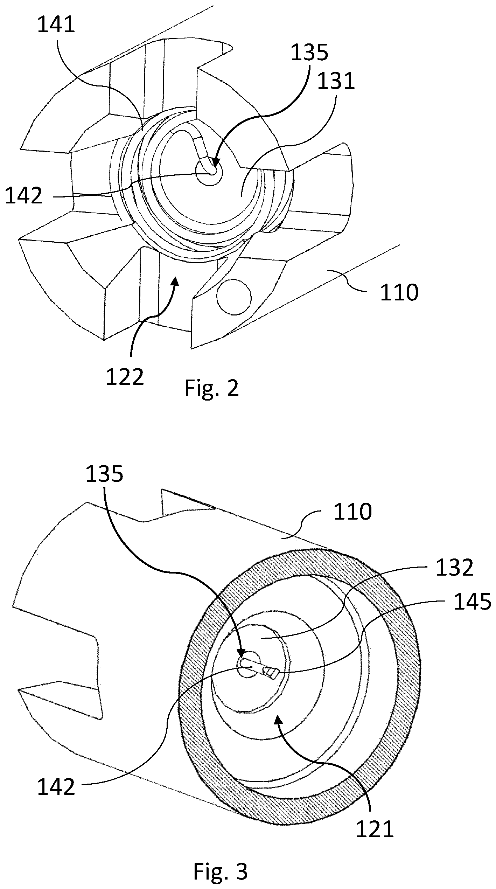

Figs. 2 and 3 show perspective views of a valve 100 according to one embodiment of the invention. The valve 100 is here exemplified with a generally cylindrical geometry. Fig. 2 shows a perspective wherein the resilient portion 141 of the spring 140 is visible. The engaging portion 142 extends from the resilient portion 141 and curves so that it extends through an aperture of the valve member 130 from a first side 131 to a second side. Fig. 3 shows a perspective view wherein the engaging portion 142 of the spring 130 is visible. The spring 130 is provided with an anchoring end 145. The anchoring end 145 is provided with a wedge shape, which may for instance be formed by a pressing process. The shape of the anchoring end 145 may prevent the valve member and the spring from being separated from one another. This may for instance facilitate assembly.

Moreover, the housing 110 may be adapted to provide one or more side recesses provided proximate the damping fluid outlet 122. The one or more side recesses may facilitate flow from the damping fluid outlet 122. As shown in Fig. 2, the housing 110 is adapted to provide four side recesses, which are symmetrically arranged proximate the damping fluid outlet around the longitudinal axis (not shown in Fig. 2). Moreover, the housing 110 may comprise a widening cross section from the damping fluid outlet towards a longitudinal end of the housing 110. This shape may facilitate damping fluid flow.

In one exemplary embodiment, the valve member 130 is configured to be moveable between a closed position in which the valve member 130 is configured to at least partially prevent a flow of damping fluid from the damping fluid inlet 121 to the damping fluid outlet 122 of the valve housing 110, and an open position in which the valve member 130 is configured to allow a flow of damping fluid from the damping fluid inlet 121 to the damping fluid outlet 122 of the valve housing 110. The valve member 130 may substantially prevent flow when in the closed position. The valve member 130 may substantially prevent flow at an interface between a boundary of the damping fluid inlet 121 and the valve member 130. However, the valve member 130 may be adapted to enable a bleed flow via one or more apertures of the valve member 130. Hence, by substantially prevent flow when in the closed position, it does not necessarily exclude a bleed flow through the valve member 130.

In one exemplary embodiment, the aperture 135 of the valve member 130 allows damping fluid to leak therethrough. The damping fluid leaking therethrough may be referred to as a bleed flow. The valve member 135 may comprise more than one aperture, such as two, three, four, or more, apertures for permitting a bleed flow through the valve member 130 without displacing the valve member 130 from the damping fluid inlet 121. While the valve member 130 may comprise a plurality of apertures, the engaging portion 142 may extend through only one of the apertures, such as through a central aperture 135 or an aperture 135 offset from a central axis.

In one exemplary embodiment, the valve member 130 is configured to be moveable from the closed position to the open position upon the flow of damping fluid exerting a force on the valve member 130 greater than the force exerted by the resilient portion 141 of the spring 140 on the valve member 130. The valve member 130 may be configured to be moveable from the closed position to the open position upon the flow of damping fluid exerting a force on the valve member 130 greater than the force exerted by the resilient portion 141 of the spring 140 on the valve member 130 in the opposite direction. When the flow of damping fluid no longer exerts a force greater than the force exerted by the resilient portion 141 of the spring 140, the valve member 130 may be actuated to move from the open position to the closed position.

Further, in one exemplary embodiment as exemplified in Fig. 1, the valve housing 110 further comprises a central portion 115 intermediate the damping fluid inlet 121 and the damping fluid outlet 122, wherein the valve member 130 is arranged within the central portion 115. The central portion 115 may be adapted in size and shape to define an internal space for allowing the valve member 130 to be moveable along the longitudinal axis A. The central portion 115 may be aligned with either or both of the damping fluid inlet 121 and the damping fluid outlet 122. The central portion 115 may provide a tapered portion so that a cross-section increases in one direction along the longitudinal axis A. In Fig. 1, the tapered portion provides a cross-section which increases in a direction from the damping fluid inlet 121 to the damping fluid outlet 122 along the longitudinal axis A. The tapered portion may advantageously provide a larger space for the resilient portion 141 of the spring 140 to reside in.

Moreover, as exemplified in Fig. 1, an inner diameter of the central portion 115 of the valve housing 110 may be greater than an inner diameter of the damping fluid inlet 121 and/or an inner diameter of the damping fluid outlet 122. The valve member 130 may be adapted with a size and shape which is larger than an inner diameter of the damping fluid inlet 121 and/or the damping fluid outlet 122. By this, the valve member 130 may be prevented from moving out of the central portion 115.

In one exemplary embodiment, the resilient portion 141 of the spring 140 is formed of a coil concentric with the valve housing 110 and with the valve member 130. The resilient portion 141 in the form of a coil may comprise a plurality of coil loops may impact an opening pressure threshold which damping fluid pressure must exceed to move the valve member 130 in a direction away from the damping fluid inlet 121. The resilient portion 141 may be adapted in size and shape to be able to exert a desired force on the valve member 130.

The coil of the spring 140 may comprise a first portion 143 for abutting the valve housing 110. The first portion 143 may be fixed relative the valve housing 110. By fixed relative the housing, it may be meant geometrically limited from moving in at least one direction of the valve housing, such as beyond the damping fluid outlet 122, or attached to the valve housing 110. The first portion 143 may be a fixed end 143 configured for abutting a recess 116 formed by the damping fluid outlet 122 and the central portion 115 of the valve housing 110. The coil of the spring 140 may comprise a movable portion 144 configured for abutting a first surface 131 of the valve member 110. The moveable portion 144 may be a movable end 144. The engaging portion 142 may be attached to the moveable portion 144.

In one exemplary embodiment, the engaging portion 142 of the spring 140 comprises an anchoring end 145 configured to prevent the spring from separating from the valve member. By this, the spring 140 may be anchored to the valve member such that when the valve member 130 is displaced away from the damping fluid inlet 121, the valve member 130 moves in a more controlled manner. Moreover, the spring 140 may be prevented from shifting away from a preferred alignment, for instance in a direction along the longitudinal axis A. Moreover, by this anchoring end, the spring and valve member may be provided during assembly together, thereby facilitating assembly.

As shown in Fig. 1, the valve member 130 may comprises an aperture 135 through which the engaging portion 142 of the spring 140 extends. The aperture 135 may extend from a first side of the valve member 130 to a second side of the valve member 130. The aperture 135 may extend centrally along the longitudinal axis A, thereby forming an aperture. Alternatively, the aperture 135 may be offset from the longitudinal axis A.

In one exemplary embodiment, the valve member 130 is configured to move between the open position and the closed position along the engaging portion 142 of the spring 140 extending through the aperture 135 of the valve member 130.

Moreover, a diameter of the valve member 130 may be less than the inner diameter of the central portion 115 of the valve housing 110. By this, a gap is provided between the valve member 130 and the central portion 115 of the valve housing 110, thereby enabling damping fluid to flow in said gap when flowing from the damping fluid inlet 121 to the damping fluid outlet 122. The gap may extend partially or wholly in a circumferential direction. The gap may be asymmetrical or symmetrical in the circumferential direction.

In the closed position, a second surface 132 of the valve member 130, opposite the first surface 131 of the valve member 130, may be configured for abutting a shoulder 117 of the valve housing 110 formed by the damping fluid inlet 121 and the central portion 115 of the valve housing 110 such that damping fluid is prevented from flowing between the valve member 130 and the central portion 115 of the valve housing 110.

In the open position, the second surface 132 of the valve member 130 may be distant from the shoulder 117 of the valve housing 110 such that damping fluid is allowed to flow between the valve member 130 and the central portion 115 of the valve housing 110.

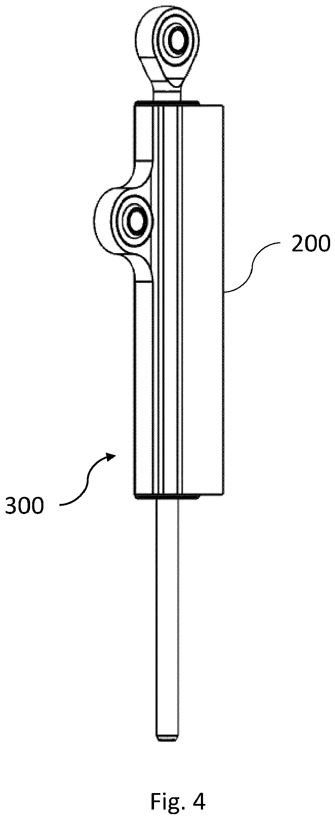

Moreover, in accordance with a second aspect of the invention, a separating piston assembly 200 for a steering damping system is provided. In Fig. 4, a damper 300 is provided with the separating piston assembly 200. According to one exemplary embodiment, which is exemplified in Fig. 5, the separating piston assembly 200 comprises an inner cylinder 210 and an outer cylinder 220. The inner cylinder 210 is arranged within the outer cylinder 220. The separating piston assembly 200 also comprises a damping fluid chamber 230 formed between the inner cylinder 210 and the outer cylinder 220. The outer cylinder 220 comprises a first damping fluid duct 241 configured to allow a flow of fluid to and from the damping fluid chamber 230 to a cavity 292 of the damper 300. The inner cylinder 210 comprises a separating piston 250. The separating piston 250 is movably arranged in the inner cylinder 210. The inner cylinder 210 also comprises a separating chamber 260 formed between the separating piston and a damping fluid outlet 270 of the inner cylinder. The separating piston 200 further comprises a valve 280 according to the first aspect or any embodiments thereof. The valve 280 is arranged at the damping fluid outlet 270 of the inner cylinder 210. The valve 280 is configured to allow a flow of damping fluid from the separating chamber 260 to the damping fluid chamber 230.

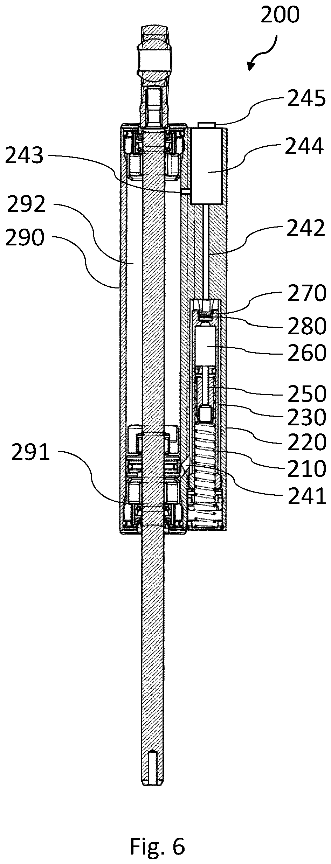

As shown in Fig. 6, the outer cylinder 220 may comprise a second damping fluid duct 242 configured to allow a flow of fluid to and from the damping fluid chamber 230. The damping fluid chamber 230 may connect directly or indirectly with a third damping fluid duct 242 by means of the second damping fluid duct 242. A valve device 244 may be provided to regulate a flow between the second damping fluid duct 242 and the third damping fluid duct 243. The valve device 244 may be a mechanical valve or an electromechanical valve. The valve device 244 may be adjustable by means of an adjustment element 245.

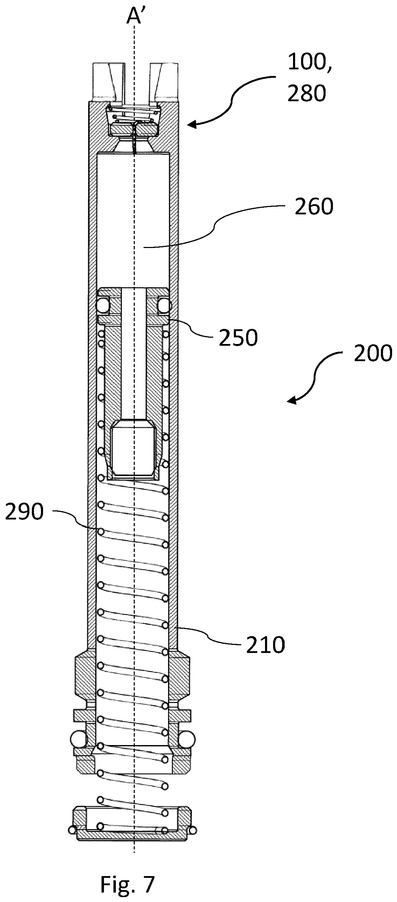

Fig. 7 shows a cross-sectional view of some components of the separating piston assembly 200. The outer cylinder 220 has been omitted from view to show other components in greater focus. As shown, a separating piston 250 is arranged to move in the inner cylinder 210 along a longitudinal axis A'. A spring 290 is also provided to exert a force on the separating piston 250. Damping fluid may flow from the separating chamber onwards to the damping fluid inlet of the valve 100, 280. The longitudinal axis A' and the longitudinal axis A may coincide or be the same.

Moreover, the separating piston assembly is exemplified as being arranged to a steering damper 300 as shown in e.g., Fig. 5. The steering damper comprises a first mounting portion for mounting the steering damper onto a handlebar of a motorcycle, cycle, etc., (not shown in Fig. 1). In addition, the steering damper comprises a second mounting portion for mounting the steering damper onto the frame or chassis of the vehicle (not shown). The steering damper comprises a piston rod extending in the longitudinal direction of the damper. The second mounting portion is attached at one end of the piston rod. A piston (piston arrangement) is arranged on the piston rod, which piston operates in a damping fluid that has been introduced in the cavity 292 of the steering damper. The cavity is provided by a cylinder 290. The first mounting portion is arranged to the cylinder 290. The piston rod is mounted so that it passes through at least one end of the cylinder 290. The steering damper comprises sealing members arranged at a plurality of locations. One or more sealing members may be for reducing damping fluid leaking from the cavity, preferably substantially preventing damping fluid leaking from the cavity. One or more sealing members may be for reducing damping fluid flowing between two components. One or more sealing members may be for allowing the piston to move relative the cylinder while also reducing damping fluid flow at an interface between the piston and the cylinder 290.

The separating piston assembly is arranged to a steering damper such that a first damping fluid duct is fluidly connected to the cavity of the steering damper. The steering damper may be incorporated in a steering damper system. The steering damper system may comprise control means for operating one or more valves of the steering damper. The steering damper system may comprise two or more steering dampers, wherein at least one of the steering dampers are provided with a separating piston assembly comprising the valve 280. In one exemplary embodiment, the first damping fluid duct 241 is configured to enable flow of damping fluid between the damping fluid chamber 230 and a return chamber 291 of a steering damper 290.

The second damping fluid duct 242 may be configured to enable flow of damping fluid between the damping fluid chamber 230 and a third damping fluid duct 243. The third damping fluid duct 243 may be configured to enable flow of damping fluid between the second damping fluid duct 242 and a compression chamber 292 of the steering damper. The return chamber and the compression chamber may be separated from one another by means of a piston of the steering damper.

In one exemplary embodiment, the valve 100 is configured to at least partially prevent flow of damping fluid from the damping fluid chamber 230 to the separating chamber 260 of the inner cylinder 210.

Fig. 3 shows a schematic illustration of a method of regulating a damping fluid flow in a separating piston assembly 200 of a steering damping system. The method comprises the steps of: providing S1 a valve 100 according to the first aspect or any embodiments thereof; in response to pressure overcoming force from said spring 140, moving S2 the valve member 130 along the longitudinal axis A away from the damping fluid inlet 121; in response to pressure no longer overcoming force from said spring 140, moving S3 the valve member 130 along the longitudinal axis A toward the damping fluid inlet 121. By this, desired damping characteristics may be achieved. The method may comprise one or more additional steps related to operation of any elements or functionalities discussed in relation to the valve 100 and/or the separating piston assembly and/or the steering damper (system).

While the foregoing is directed to embodiments of the disclosure, other and further embodiments may be devised without parting from the inventive concept discussed herein. The scope of the invention is however determined by the claims.

### ITEMIZED LIST OF EMBODIMENTS

1. A valve (100) for use in a separating piston assembly (200) of a steering damping system, the valve (100) comprising:
   a valve housing (110) extending along a longitudinal axis (A) and comprising:
      - a damping fluid inlet (121), and
      - a damping fluid outlet (122);
   a valve member (130) arranged within the valve housing (110) and configured to be movable along the longitudinal axis (A);
   a spring (140) arranged within the valve housing and comprising:
      - a resilient portion (141), and
      - an engaging portion (142);
   wherein the resilient portion (141) is configured to exert a force on the valve member (130) in a direction towards the damping fluid inlet (121); and
   wherein the engaging portion (142) is configured to engage with the valve member (130).
2. The valve (100) according to embodiment 1, wherein the valve member (130) is configured to be moveable between a closed position in which the valve member (130) is configured to at least partially prevent a flow of damping fluid from the damping fluid inlet (121) to the damping fluid outlet (122) of the valve housing (110), and an open position in which the valve member (130) is configured to allow a flow of damping fluid from the damping fluid inlet (121) to the damping fluid outlet (122) of the valve housing (110).
3. The valve (100) according to embodiment 2, wherein the valve member (130) is configured to be moveable from the closed position to the open position upon the flow of damping fluid exerting a force on the valve member (130) greater than the force exerted by the resilient portion (141) of the spring (140) on the valve member (130).
4. The valve (100) according to embodiment 1, wherein the valve housing (110) further comprises a central portion (115) intermediate the damping fluid inlet (121) and the damping fluid outlet (122), wherein the valve member (130) is arranged within the central portion (115).
5. The valve (100) according to embodiment 4, wherein an inner diameter of the central portion (115) of the valve housing (110) is greater than an inner diameter of the damping fluid inlet (121) and/or an inner diameter of the damping fluid outlet (122).
6. The valve (100) according to any of the preceding embodiments, wherein the resilient portion (141) of the spring (140) is formed of a coil, wherein said coil is optionally concentric with the valve housing (110) and/or with the valve member (130).
7. The valve (100) according to embodiment 6, wherein the coil comprises a coil end (143) configured for abutting a recess (116) formed by the damping fluid outlet (122) and the central portion (115) of the valve housing (110) and a movable end (144) configured for abutting a first surface (131) of the valve member (110).
8. The valve (100) according to any of the preceding embodiments, wherein the engaging portion (142) of the spring (140) comprises an anchoring end (145) configured to prevent the spring from disengaging from the valve member (130).
9. The valve (100) according to any of the preceding embodiments, wherein the valve member (130) comprises an aperture (135) adapted for allowing the engaging portion (142) of the spring (140) to extend therethrough.
10. The valve (100) according to embodiment 9, wherein the valve member (130) is configured to move relative the engaging portion (142) between the open position and the closed position.
11. The valve (100) according to embodiment 9, wherein a diameter of the valve member (130) is less than the inner diameter of the central portion (115) of the valve housing (110).
12. The valve (100) according to any of the preceding embodiments, wherein, in the closed position, a second surface (132) of the valve member (130), opposite the first surface (131) of the valve member (130), is configured for abutting a shoulder (117) of the valve housing (110) formed by the damping fluid inlet (121) and the central portion (115) of the valve housing (110) such that damping fluid is prevented from flowing between the valve member (130) and the central portion (115) of the valve housing (110).
13. The valve (100) according to any of the preceding embodiments, wherein, in the open position, the second surface (132) of the valve member (130) is distant from the shoulder (117) of the valve housing (110) such that damping fluid is allowed to flow between the valve member (130) and the central portion (115) of the valve housing (110).
14. The valve (100) according to any of the preceding embodiments, wherein the aperture (135) of the valve member (130) allows damping fluid to leak therethrough.
15. A separating piston assembly (200) for a steering damping system, the separating piston assembly (200) comprising:
   an inner cylinder (210) and an outer cylinder (220), wherein the inner cylinder (210) is arranged within the outer cylinder (220);
   a damping fluid chamber (230), formed between the inner cylinder (210) and the outer cylinder (220);
   wherein the outer cylinder (220) comprises:
      - a first damping fluid duct (241) configured to allow a flow of fluid to and from the damping fluid chamber (230), and
      - optionally, a second damping fluid duct (242) configured to allow a flow of fluid to and from the damping fluid chamber (230);
   wherein the inner cylinder (210) is provided with:
      - a separating piston (250), movably arranged therein, and
      - a separating chamber (260) formed between the separating piston and a damping fluid outlet (270) of the inner cylinder; and
   the separating piston (200) further comprising a valve (280) according to any of embodiments 1-14 arranged at the damping fluid outlet (270) of the inner cylinder (210) and configured to allow a flow of damping fluid from the separating chamber (260) to the damping fluid chamber (230).
16. The separating piston assembly (200) according to embodiment 15, wherein the first damping fluid duct (241) is configured to enable flow of damping fluid between the damping fluid chamber (230) and a return chamber (291) of a steering damper (290).
17. The separating piston assembly (200) according to any one of embodiments 15-16, wherein the second damping fluid duct (242) is configured to enable flow of damping fluid between the damping fluid chamber (230) and a third damping fluid duct (243).
18. The separating piston assembly (200) according to embodiment 17, wherein the third damping fluid duct (243) is configured to enable flow of damping fluid between the second damping fluid duct (242) and a compression chamber (292) of the steering damper.
19. The separating piston assembly (200) according to any one of embodiments 15-18, wherein the valve (100) is configured to at least partially prevent flow of damping fluid from the damping fluid chamber (230) to the separating chamber (260) of the inner cylinder (210).
20. Method of regulating a damping fluid flow in a separating piston assembly (200) of a steering damping system, comprising the steps of:
   - providing a valve (100) according to any of embodiments 1-14;
   - in response to pressure overcoming force from said spring (140), moving the valve member (130) along the longitudinal axis (A) away from the damping fluid inlet (121);
   - in response to pressure no longer overcoming force from said spring (140), moving the valve member (130) along the longitudinal axis (A) toward the damping fluid inlet (121).

## Claims

1. A valve (100) for use in a separating piston assembly (200) of a steering damping system, the valve (100) comprising:
a valve housing (110) extending along a longitudinal axis (A) and comprising:
- a damping fluid inlet (121), and
- a damping fluid outlet (122);
a valve member (130) arranged within the valve housing (110) and configured to be movable along the longitudinal axis (A);
a spring (140) arranged within the valve housing and comprising:
- a resilient portion (141), and
- an engaging portion (142);
wherein the resilient portion (141) is configured to exert a force on the valve member (130) in a direction towards the damping fluid inlet (121); and
wherein the engaging portion (142) is configured to engage with the valve member (130).

2. The valve (100) according to claim 1, wherein the valve member (130) is configured to be moveable between a closed position in which the valve member (130) is configured to at least partially prevent a flow of damping fluid from the damping fluid inlet (121) to the damping fluid outlet (122) of the valve housing (110), and an open position in which the valve member (130) is configured to allow a flow of damping fluid from the damping fluid inlet (121) to the damping fluid outlet (122) of the valve housing (110).

3. The valve (100) according to claim 2, wherein the valve member (130) is configured to be moveable from the closed position to the open position upon the flow of damping fluid exerting a force on the valve member (130) greater than the force exerted by the resilient portion (141) of the spring (140) on the valve member (130).

4. The valve (100) according to claim 1, wherein the valve housing (110) further comprises a central portion (115) intermediate the damping fluid inlet (121) and the damping fluid outlet (122), wherein the valve member (130) is arranged within the central portion (115).

5. The valve (100) according to claim 4, wherein an inner diameter of the central portion (115) of the valve housing (110) is greater than an inner diameter of the damping fluid inlet (121) and/or an inner diameter of the damping fluid outlet (122).

6. The valve (100) according to any of the preceding claims, wherein the resilient portion (141) of the spring (140) is formed by a coil, wherein said coil is optionally concentric with the valve housing (110) and/or with the valve member (130).

7. The valve (100) according to claim 6, wherein the coil comprises a coil end (143) configured for abutting a recess (116) formed by the damping fluid outlet (122) and the central portion (115) of the valve housing (110) and a movable end (144) configured for abutting a first surface (131) of the valve member (110).

8. The valve (100) according to any of the preceding claims, wherein the engaging portion (142) of the spring (140) comprises an anchoring end (145) configured to prevent the spring from disengaging from the valve member (130).

9. The valve (100) according to any of the preceding claims, wherein the valve member (130) comprises an aperture (135) adapted for allowing the engaging portion (142) of the spring (140) to extend therethrough.

10. The valve (100) according to claim 9, wherein the valve member (130) is configured to move relative the engaging portion (142) between the open position and the closed position.

11. The valve (100) according to claim 9, wherein a diameter of the valve member (130) is less than the inner diameter of the central portion (115) of the valve housing (110).

12. The valve (100) according to any of the preceding claims, wherein, in the closed position, a second surface (132) of the valve member (130), opposite the first surface (131) of the valve member (130), is configured for abutting a shoulder (117) of the valve housing (110) formed by the damping fluid inlet (121) and the central portion (115) of the valve housing (110) such that damping fluid is prevented from flowing between the valve member (130) and the central portion (115) of the valve housing (110).

13. The valve (100) according to any of the preceding claims, wherein the aperture (135) of the valve member (130) allows damping fluid to leak therethrough.

14. A separating piston assembly (200) for a steering damping system, the separating piston assembly (200) comprising:
an inner cylinder (210) and an outer cylinder (220), wherein the inner cylinder (210) is arranged within the outer cylinder (220);
a damping fluid chamber (230), formed between the inner cylinder (210) and the outer cylinder (220);
wherein the outer cylinder (220) comprises:
- a first damping fluid duct (241) configured to allow a flow of fluid to and from the damping fluid chamber (230), and
- optionally, a second damping fluid duct (242) configured to allow a flow of fluid to and from the damping fluid chamber (230);
wherein the inner cylinder (210) is provided with:
- a separating piston (250), movably arranged therein, and
- a separating chamber (260) formed between the separating piston and a damping fluid outlet (270) of the inner cylinder; and
the separating piston (200) further comprising a valve (280) according to any of claims 1-13 arranged between the separating chamber (260) and the damping fluid outlet (270) of the inner cylinder (210) and configured to allow a flow of damping fluid from the separating chamber (260) to the damping fluid chamber (230).

15. Method of regulating a damping fluid flow in a separating piston assembly (200) of a steering damping system, comprising the steps of:
- providing a valve (100) according to any of claims 1-13;
- in response to pressure overcoming force from said spring (140), moving the valve member (130) along the longitudinal axis (A) away from the damping fluid inlet (121);
- in response to pressure no longer overcoming force from said spring (140), moving the valve member (130) along the longitudinal axis (A) toward the damping fluid inlet (121).
